# EUROPEAN PATENT APPLICATION

(11) **EP 4 160 837 A1**
(43) Date of publication of application: **05.04.2023**
(21) Application number: 22198656.5
(22) Date of filing: 29.09.2022
(51) Int. Cl.: H02G 1/08

(54) **METHOD AND A SET OF TOOLS FOR REMOVING INTERNALS FROM A CABLE, IN PARTICULAR A COAXIAL CABLE**

(30) Priority: 29.09.2021 NL 2029268
(71) Applicant: CXT Invest B.V., 3734 EE Den Dolder (NL)
(72) Inventor: VELDHOEN, Johannes, 3734 EE Den Dolder (NL); LIMBURG, Ronald, 3734 EE Den Dolder (NL); DOMINESE, Elisa, 3734 EE Den Dolder (NL)
(74) Representative: Melchior, Robin

(57) **Abstract**

The invention relates to a method for ejecting internals from a cable, in particular a coaxial cable, wherein the method comprises the steps of:
a) cutting into the internals along a longitudinal direction of the cable by moving a cutting tool in the longitudinal direction through the cable;
b) scraping off the internals cut in step a) by moving a scraping tool, different from the cutting tool, in the longitudinal direction through the cable; and
c) removing the internals scraped off in step b) in the longitudinal direction from the cable;
wherein the cutting in step a) is continuous or substantially continuous from a first end of the cable up to a second end of the cable, opposite to the first end.

## Description

### BACKGROUND

The invention relates to a method and a set of tools for ejecting internals from a cable, in particular a coaxial cable.

Due to the rapid technological developments in the field of telecommunications, there is a high demand for cables through which large amounts of data can be transmitted. Laying new cables is not only costly and time-consuming; existing cables or underground infrastructure may be damaged in the process. An alternative is to eject the old core, i.e. a copper core, from an existing cable and to inject a new core, i.e. a modern optical waveguide, into the empty cable for improved data transmission through the existing cable.

US 4,553,877 A discloses a method for removing conductors and insulation material from a coaxial cable by guiding a cutting mill on the center conductor of the cable against the insulation material, to mill the insulation material into particles, which are then brought back and out of the cable pipe by means of a suitable fluid, such as air. The conductor is removed thereafter.

JP 2006-050781 A discloses a method for removing insulation from a power cable with the use of a removal device that is moved forwards and backwards in a reciprocating manner, cutting the insulation into strands in one direction and removing the insulation in an opposite direction. In particular, the removal device is provided with a rear edge which is designed such that the insulation gets entangled with the removal device and is torn off and pulled out together with the removal device.

GB 736,749 A briefly hints at the possibility of clearing the inside surface of a lead sheath of insulation or insultation debris left therein by cutting, scraping and/or brushing.

### SUMMARY OF THE INVENTION

A disadvantage of the method known from US 4,553,877 A is that instead of milling the insulation material into particles, the insulation is milled into strands. The cable is much more likely to get clogged when trying to remove said strands. JP 2006-050781 A has a similar problem in that the strands cut by the removal tool become entangled at the rear end of the same removal tool when the removal tool is moved back and forth in a reciprocating movement, thereby potentially clogging the cable when too much length of strands is removed at once.

It is an object of the present invention to provide a method and a set of tools for ejecting internals from a cable, in particular a coaxial cable, wherein the internals can be removed more easily.

According to a first aspect, the invention provides a method for ejecting internals from a cable, in particular a coaxial cable, wherein the method comprises the steps of:
a) cutting into the internals along a longitudinal direction of the cable by moving a cutting tool in the longitudinal direction through the cable;
b) scraping off the internals cut in step a) by moving a scraping tool, different from the cutting tool, in the longitudinal direction through the cable; and
c) removing the internals scraped off in step b) in the longitudinal direction from the cable;
wherein the cutting in step a) is continuous or substantially continuous from a first end of the cable up to a second end of the cable, opposite to the first end.

Referring to the prior art, it is noted GB 736,749 A hints at a combination of cutting, scraping and/or brushing, but fails to disclose any further details thereof. US 4,553,877 A discloses milling and removal, but fails to disclose the separate steps of cutting with a cutting tool in continuous manner and scraping with a scraping tool different from the cutting tool. JP 2006-050781 A discloses cutting and immediate removal in a reciprocating movement, which is the opposite of continuously cutting from the first end to the second end of the cable. Moreover, because the same removal tool is used for cutting and immediate removal, only small lengths can be removed at once to prevent that the strands, entangled at the rear end of the removal tool, clog the cable. Both US 4,553,877 A and JP 2006-050781 A share the disadvantage that strands can potentially clog the cable. It is assumed that JP 2006-050781 A solves this problem by moving the removal tool in a reciprocating movement over relative short distance, thereby progressing through the cable relatively slowly.

The method according to the present invention has the technical advantage that, by cutting the internals prior to scraping, the internals can be scraped off and transformed into relatively small particles that can be removed relatively easily. Moreover, by cutting continuously from the first end up to the second end, the internals can be cut steadily, continuously and/or consistently to optimally prepare the cable for the subsequent steps of the method. In particular, the internals can be cut along the entire length of the cable, without immediate removal, in one continuous and/or uninterrupted movement. This may save considerable time compared to the short reciprocating movement of the prior art. Moreover, as the cutting tool is not repeatedly reversed somewhere halfway along cable during the cutting, the internals that have already been cut are less likely to be deformed and can be scraped off more or less in the state in which they were cut, thereby preventing that the scraping step already clogs the cable before the particles can be removed in the next step. Also, because the cutting step is performed continuously from the first end up to the second end, without reversal, only a single winch is required at the second end to pull the cutting tool through the cable.

Finally, the use of a scraping tool that is separate, distinct and/or different from the cutting tool, has the further technical advantage that it allows for both the cutting tool and the scraping tool to be optimized for their specific purposes. In particular, the cutting tool can be optimized for the sole purpose of cutting the internals into distinct sections without significantly deforming the internals. More in particular, any features that could potentially entangle or deform the cut internals can be left out from the design of the cutting tool. Meanwhile, the separately provided scraping tool does not need to cut the internals, nor does it need to remove the internals immediately. The scraping tool can therefore be optimized for the sole purpose of scraping off said internals without immediately removing the scraped off internals. The scraping tool can be moved in the same direction as the cutting tool, or in a direction opposite to said cutting tool.

Preferably, the internals are cut in step a) by moving the cutting tool in one-way only in a cutting direction along the longitudinal direction of the cable prior to step b). Again, by cutting in one-way only, it can be prevented that the cutting tool is reversed and deforms the internals that have already been cut. Such deformations can reduce the effectiveness of the subsequent steps of the method and can potentially clog the cable when the performing.

In another embodiment the method comprises the step of returning the cutting tool to the first end after the cutting in step a) for another run of continuous or substantially continuous cutting from the first end up to the second end, prior to step b). During the second run of cutting the cutting tool may cut slightly deeper into the previously cut placeholders, resulting in a more consistent and/or reliable cut.

In another embodiment the cable has a center axis extending in the longitudinal direction, wherein the cutting tool has a cutter holder for holding one or more cutting blades, wherein the cutter holder is symmetrical or substantially symmetrical in a mid-plane perpendicular to the center axis. Hence, the cutting tool may be pulled through the cable in the cutting direction and the retraction direction in substantially the same manner. In other words, the movement direction of the cutting tool can effectively be reversed.

In a further embodiment the internals are cut radially in step a). By cutting into the internals radially, the internals can be partitioned or cut into distinct sections that can be scraped off and/or removed more easily in the subsequent steps of the method. The cuts can further prevent the formation of long strands in the subsequent steps of the method. Moreover, the internals can remain at least partially connected to the outer layer or outer layers of the cable in said radial direction and therefore remain more or less in place or in position after the cutting. In other words, the internals are still more or less uniform after cutting. The scraping can thus be performed more steadily.

In a further embodiment the cable has a center axis extending in the longitudinal direction, wherein the internals are cut in a plurality of cutting planes extending radially to said center axis in step a). The internals can be partitioned or cut into distinct sections that are defined by said cutting planes.

Preferably, the plurality of cutting planes are evenly distributed in a circumferential direction about the center axis. Each partition or section created by the cutting has more or less the same size. Therefore, the scraping can be performed more steadily. More in particular, most of the particles will have more or less the same size.

More preferably, the method further comprises the step of cutting into the internals along the longitudinal direction of the cable in a plurality of further cutting planes by moving a further cutting tool in the longitudinal direction through the cable, wherein the further cutting planes are angularly offset about the center axis with respect to the cutting planes. The angle offset between the cutting planes generates additional cuts in the internals that divide said internals into even more distinct sections compared to the cutting result with a single cutting tool.

In a further embodiment the internals are scraped off circumferentially and/or helically in step b). Hence, any remaining connections between the previously cut internals and the surrounding layers of the cable can be terminated, thereby effectively converting the internals into loose particles. The loose particles are not pulled or torn off in the longitudinal direction of the cable. Instead, they are discharged circumferentially and left behind in the cavity of the cable for removal in the subsequent removal step.

In one embodiment, the scraping tool is a drill. The tip or the flutes of the drill bit can effectively scrape off the internals and discharge said towards the rear of said drill with respect to the scraping direction.

Preferably, the drill has a head, a tail and flutes extending helically between the head and the tail, wherein the flutes define helical scraping edges. The flutes can define scraping channels for scraping off and discharging the cut placeholders in a removal direction opposite to the scraping direction.

More preferably, the helical scraping edges are flattened. The flattened helical scraping edges can ensure that the drill only scrapes along the inner surface of the cable and does not actively cut into said inner surface.

Additionally or alternatively, the cable has a center axis extending in the longitudinal direction, the scraping tool is undriven in a circumferential direction about said center axis. In other words, the scraping tool is not actively driven to rotate. The scraping tool can thus be considered as a static scraping tool in terms of its rotation. It can sway or rotate only slightly, i.e. a few degrees, as a result of the scraping action.

In a further embodiment steps b) and c) are alternated repeatedly. By alternating the steps, the internals do not have to be removed all at once. Instead, the method can be performed initially over a relatively small length of the cable.

Preferably, steps b) and c) are performed along a length of the cable that is incrementally increased after at least one sequence of steps b) and c). More preferably, the length is incrementally increased with less than two meters, and preferably with less than one meter. In other words, the internals can be scraped off and removed in increasingly longer stages. Incrementally increasing the length of each stage prevents that too much of the internals are scraped off at once, which can cause clogging.

In a further embodiment the internals are scraped off in step b) in a scraping direction parallel to the longitudinal direction of the cable, wherein the internals are removed in step c) in a removal direction opposite to the scraping direction. Hence, the particles generated by the scraping can be removed through a part of the cable in which the internals are already scraped off and do not hinder the removal step.

Preferably, the internals are scraped off in step b) by moving a scraping tool in the scraping direction through the cable, wherein the internals are removed in step c) by moving a removal tool in the removal direction, wherein the scraping tool and the removal tool are connected to be moved in unison in the scraping direction and the removal direction. In other words, the removal step can be performed directly after completing the scraping step, merely by reversing the direction of the interconnected scraping tool and removal tool. Consequently, steps b) and c) can be conveniently performed as part of a single action of moving the set of the scraping tool and the removal tool back-and-forth through the cable.

In a further embodiment the cable comprises a dielectric and placeholders concentrically arranged within said dielectric, wherein the internals that are cut, scraped-off and removed in steps a), b) and c) are the placeholders. Preferably, the dielectric remains in the cable after step c). By removing the placeholders only, the space vacated by the core and said placeholders is sufficiently large to receive a modern telecommunications core, e.g. a bundle of optical fibers and/or conductors. Preferably, the internal diameter of the cavity left by the steps of the aforementioned method is at least five millimeters, preferably at least seven millimeters and more preferably at least eight millimeters.

In a further embodiment the method comprises the step of removing the core from the cable prior to step a) . By removing the core prior to step a), the space vacated by the core can be used to insert the aforementioned cutting tool, the scraping tool and/or the removal tool. The core may be heated prior to removal to facilitate its removal.

In a preferred embodiment thereof, the method further comprises the step of widening a cavity vacated by the cable prior to step a). The widening of the cavity allows for the cutting tool to be inserted more easily and to experience less resistance when it is being pulled through the cable.

According to a second, unclaimed aspect, the invention provides a method for ejecting internals from a cable, in particular a coaxial cable, wherein the method comprises the steps of:
a) cutting into the internals along a longitudinal direction of the cable;
b) scraping off the internals cut in step a); and
c) removing the internals scraped off in step b) in the longitudinal direction from the cable.

The method according to the second aspect of the invention can be combined with any of the aforementioned embodiments.

The various aspects and features described and shown in the specification can be applied, individually, wherever possible. These individual aspects, in particular the aspects and features described in the attached dependent claims, can be made subject of divisional patent applications.

### BRIEF DESCRIPTION OF THE DRAWINGS

The invention will be elucidated on the basis of an exemplary embodiment shown in the attached schematic drawings, in which:
figures 1A and 1B show a longitudinal section and a cross section, respectively, of a coaxial cable prior to starting a method for ejecting internals from said coaxial cable;
figures 2A and 2B show a longitudinal section and a cross section, respectively, of the coaxial cable of figures 1A and 1B, after a first step of the method in which a core is removed;
figures 3A and 3B show a longitudinal section and a cross section, respectively, of the coaxial cable of figures 2A and 2B, after an optional second step of the method in which the space vacated by the core is widened;
figures 4A and 4B show a longitudinal section and a cross section, respectively, of the coaxial cable of figures 3A and 3B, after a third step of the method in which placeholders are cut;
figures 5A and 5B show a longitudinal section and a cross section, respectively, of the coaxial cable of figures 4A and 4B, after an optional fourth step of the method in which placeholders are cut again;
figures 6A and 6B show a longitudinal section and a cross section, respectively, of the coaxial cable of figures 5A and 5B, after a fifth step of the method in which the internals are scraped off;
figure 7A and 7B show a longitudinal section and a cross section, respectively, of the coaxial cable of figures 6A and 6B, after a sixth step of the method in which the internals are removed;
figures 8A and 8B show a longitudinal section and a cross section, respectively, of the coaxial cable of figures 6A and 6B, after an alternative sixth step of the method in which the internals are removed; and
figures 9A, 9B and 9C show longitudinal sections of the coaxial cable during the third step and the optional fourth step of the method.

### DETAILED DESCRIPTION OF THE INVENTION

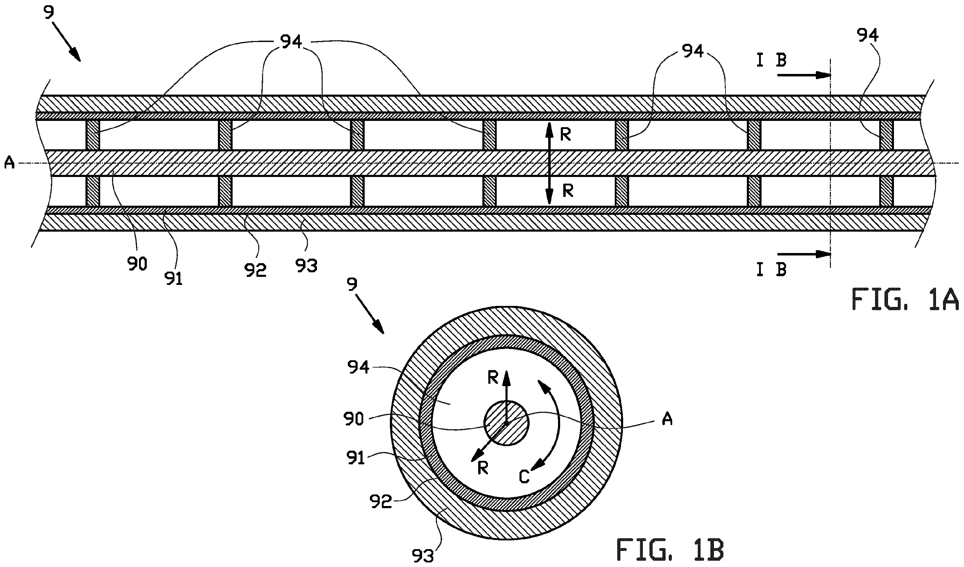

Figure 1A-7B show the steps of a method for extracting, removing or ejecting internals from a cable 9, in particular a coaxial cable. The cable 9 has a center axis A and a longitudinal direction L parallel to said center axis A. As shown in figures 1A and 1B, the cable 9 comprises a core 90, a dielectric 91 concentrically arranged around said core 90, a conducting shield 92 concentrically arranged around the dielectric 91 and an outer sheath 93 concentrically arranged around the conducting shield 92. In this exemplary embodiment, the core 90 comprises one or more copper conductors. The dielectric 91 is made from a suitable plastic material, for example a polyethylene. The conducting shield 92 is made from a non-welded copper foil that is wound helically around the dielectric 91. The outer sheath 93 is again made from a suitable plastic material, for example a polyethylene.

The dielectric 91 is spaced apart from the core 90 by annular spacers or placeholders 94 mounted at intervals along the core 90. During the manufacturing of the cable 9, the outer sheath 93 is crimped onto the conducting shield 92 and the dielectric 91. As a result the dielectric 91 is compressed slightly, except at the positions of the placeholders 94. As a result, small annular ridges 95 are formed in the outer surface of the dielectric 91 along the length thereof. Because of the annular ridges 95, the outside of the dielectric 91 resembles a bamboo-like structure. A cable constructed in this manner is also known as a COAX 3 Bamboo cable.

The cable 9 is an existing cable that may have been buried for a long period of time. By ejecting the core 90, a newer, more modern data transmission medium, such as an optical wave guide, may be introduced into the existing cable 9.

The core 90, the dielectric 91 and the placeholders 94 are the 'internals' of the cable 9. The method of the present invention is aimed at removing, extracting and/or ejecting at least one of the 'internals', in particular the core 90 and the placeholders 94. Optionally, the dielectric 91 may be removed as well.

The internals are removed with the use of a set of tools, more specifically one or more cutting tools 1, 1', a scraping tool 2, a removal tool 3 and optionally a planing tool 5. These tools 1, 1', 2, 3, 5 will be briefly discussed hereafter before going into more detail about the method.

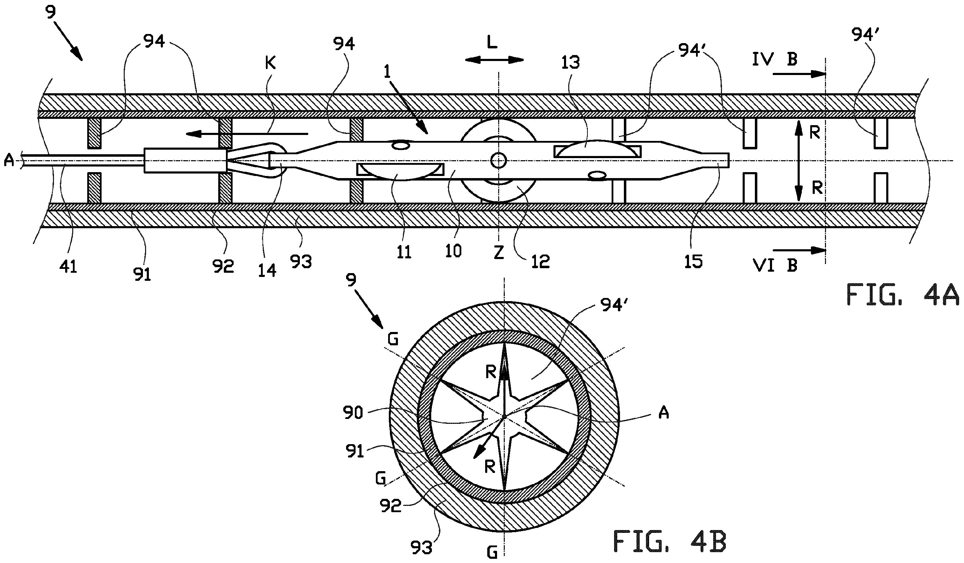

As shown in figure 4A, the cutting tool 1 is configured or arranged for cutting into the placeholders 94 radially or with a least a vector component in a radial direction R perpendicular to the center axis A of the cable 9, while the cutting tool 1 is being moved in a cutting direction K parallel to the longitudinal direction L of the cable 9. An example of a cut placeholder 94' is shown in figure 4B.

The cutting tool 1 comprises a cutter holder 10 that holds one or more knives or cutting blades 11-13. The one or more cutting blades 11-13 are dimensioned to fit inside the conducting shield 92, and preferably inside the dielectric 91. In this example, the cutting tool 1 is provided with three cutting blades 11-13. Alternatively, two or more than three cutting blades may be provided. The cutting blades 11-13 are spaced apart in the longitudinal direction L of the cable 9. The cutting blades 11-13 are distributed evenly around the circumference of the cutter holder 10. In this example, the cutting blades 11-13 extend in radial planes or cutting planes G, i.e. planes that extend parallel to the radial direction R, which are evenly spaced apart over one-hundred-and-twenty degrees. In this example, the cutting blades 11-13 are disc shaped and rotatable about respective cutting axes concentric to said cutting blades 11-13.

The cutting tool 1 is further provided with a first pulling eye 14 at a first side or a first end of the cutter holder 10 facing in the cutting direction K and optionally a second pulling eye 15 at a second side or a second end, opposite to the first side or the first end. During cutting, a first pull cord or first pull wire 41 is connected to the first pulling eye 14 for pulling the cutting tool 1 through the cable 9 in the cutting direction K. Optionally, a further pull cord or further pull wire (not shown) may be connected to the second pulling eye 15. The further pull wire may be used to keep the cutting tool 1 tensioned and/or aligned during cutting in the cutting direction K. The further pull wire may also be used to retract the cutting tool 1 in a retraction direction M opposite to the cutting direction K.

In particular, it is noted that the cutter holder 10 has an outer shape or contour that is symmetrical or substantially symmetrical with respect to a mid-plane Z perpendicular to the center axis A, such that the cutting tool 1 may be pulled through the cable 9 in the cutting direction K and the retraction direction M in substantially the same manner. In other words, the movement direction of the cutting tool 1 may effectively be reversed. In particular, it has been found that when the cutting tool 1 is retracted in the retraction direction M, the cutting blades 11-13 will stay in the cuts that were previously created by said cutting blades 11-13.

The pull cords or pull wires 41 are preferably a steel wire or a Dyneema cord.

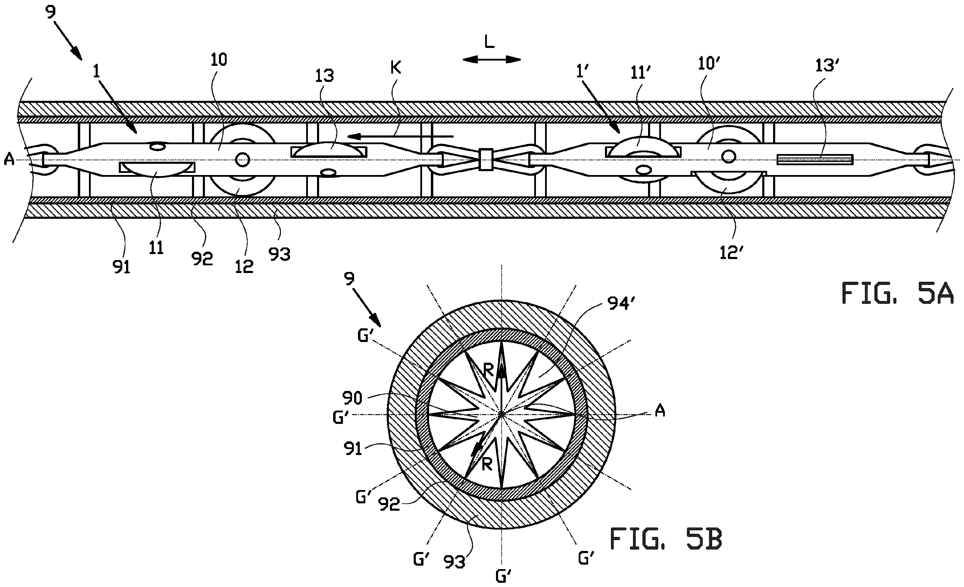

As shown in figure 5A, a further cutting tool 1' similar or identical to the aforementioned cutting tool 1 may be provided to generate additional cuts in the internals. In this example, the further cutting tool 1' is connected end-to-end to the aforementioned cutting tool 1 to be pulled through the cable 9 simultaneously. Alternatively, the further cutting tool 1' may be pulled independently of the aforementioned cutting tool 1 through the cable 9. Preferably, the cutting blades 11', 12', 13' of the further cutting tool 1' extend in further cutting planes G' that are angularly offset with respect to the cutting blades 11, 12, 13 of the aforementioned cutting tool 1, preferably with an offset angle of approximately sixty degrees.

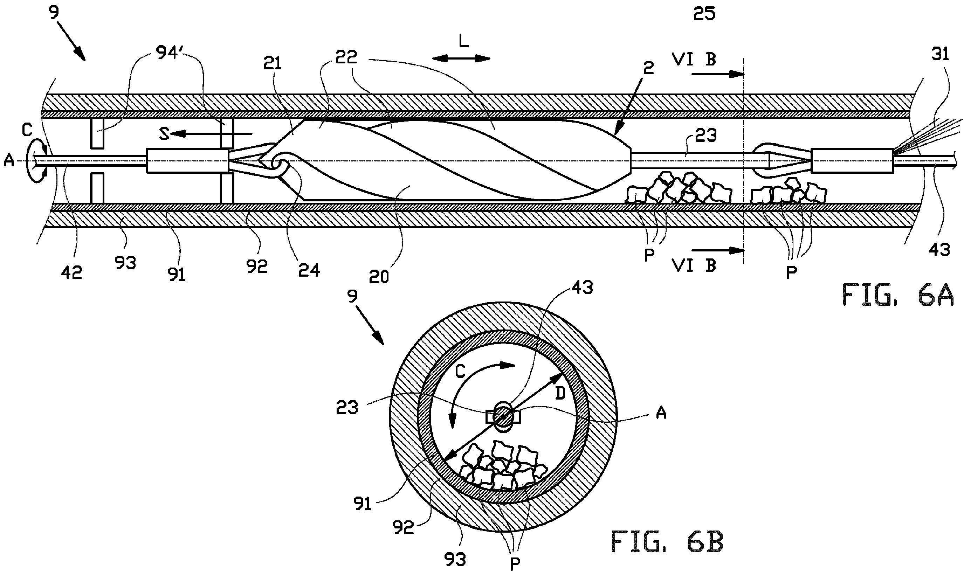

As shown in figure 6A, the scraping tool 2 is configured or arranged for drilling, milling, pulverizing, destructing and/or scraping off the cut placeholders 94' while moving said scraping tool 2 in a scraping direction S parallel to the longitudinal direction L of the cable 9. The cut placeholders 94' are converted into small particles P, shown in figures 6A and 6B.

The scraping tool 2 comprises a drill bit or a drill 20. The drill 20 is dimensioned to fit inside the conducting shield 92, and preferably inside the dielectric 91. The drill 20 has a head 21, a tail 23 and flutes 22 extending helically between the head 21 and the tail 23. The flutes 22 defines scraping channels for scraping off and discharging the cut placeholders 94' in a removal direction T opposite to the scraping direction S. As such, the scraping tool 2 scrapes off the cut placeholders 94' predominantly in a circumferential direction or with at least a component in the circumferential direction about the center axis A of the cable 9. In other words, the scarping tool 2 does not pull or tear the cut placeholder 94' along in the longitudinal direction L of the cable 9. Instead, it scrapes and discharges the cut placeholders 94' in the circumferential direction into the cavity of the cable 9, ready for removal in the subsequent removal step. The helical scraping edges defined by the flutes 22 have been flattened to ensure that drill 20 only scrapes along the inner surface of the cable 9 and does not actively cut into said inner surface. This also makes the drill 20 less likely to rotate about the center axis A as a result of the scraping action. In this example, the tail 23 comprises a shank-like body that projects at the rear of the scraping tool 2.

The scraping tool 2 is further provided with a first pulling eye 24 at a first side or a first end of the drill 20 facing in the scraping direction S and a second pulling eye 25 at a second side or a second end, opposite to the first side or the first end. During cutting, a second pull wire 42 and a third pull wire 43 are connected to the first pulling eye 24 and the second pulling eye 25, respectively, for alternately pulling the scraping tool 2 through the cable 9 in the scraping direction S and the removal direction T.

The second pull cord or pull wire 42 and the third pull cord or pull wire 43 are preferably steel wires or Dyneema cords.

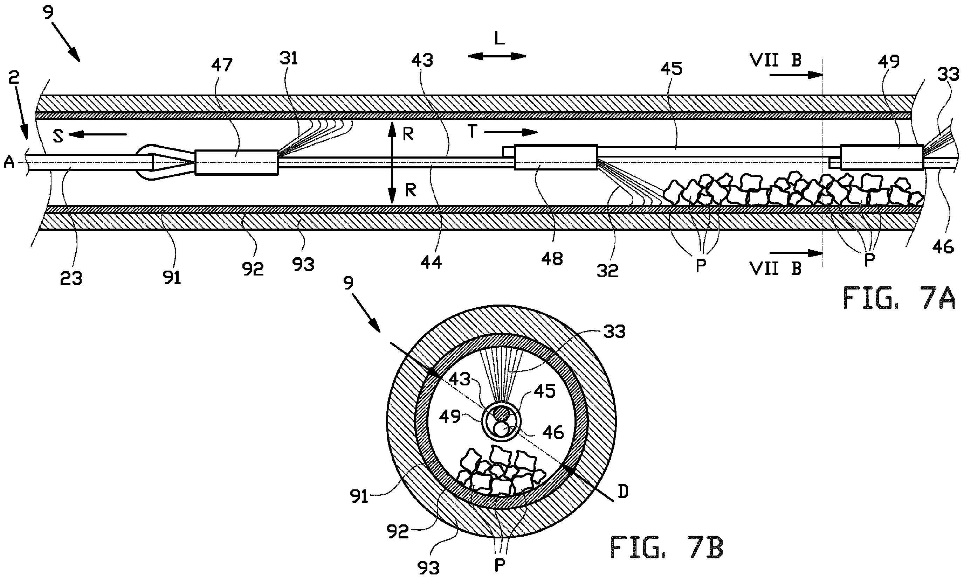

As shown in figure 7A, the removal tool 3 is configured or arranged for removing the particles P generated during scraping. In this example, the removal tool 3 comprises one or more brushes 31-33. Preferably, the removal tool 3 is connected to the scraping tool 2 at a side or an end thereof facing in the removal direction T. In particular, the one or more brushes 31-33 are formed by unstranded ends of the third pull cord or third pull wire 43.

In this exemplary embodiment, the third pull wire 43 comprises several wire sections 44-46, interconnected with each other via wire connectors 47-49. Each wire section 44-46 has an unstranded end that is configured to act as a brush 31-33 when the removal tool 3 is moved in the removal direction T. The strands of the unstranded end are deflected radially outwards under an oblique angle to the center axis A. Preferably, the strands are deflected in a different radially outward direction for each wire section 44-46, such that the brushes 31-33 brush along a different part of the inner circumference of the cable 9 for each brush 31-33.

The strands are resilient and can be bend from a flat position close to or surrounding the center axis A into a brushing position radially outwards of said flat position. Because of the oblique angle facing in the removal direction T, the brushes 31-33 brush along the inner wall of the cable 9 only when the removal tool 3 is moved in the removal direction T. When the removal tool 3 is moved, together with the scraping tool 2, in the scraping direction S, the brushes 3-33 only slide along the inner circumference of the cable 9, with minimal brushing action. Hence, the brushes 31-33 can be relatively compact.

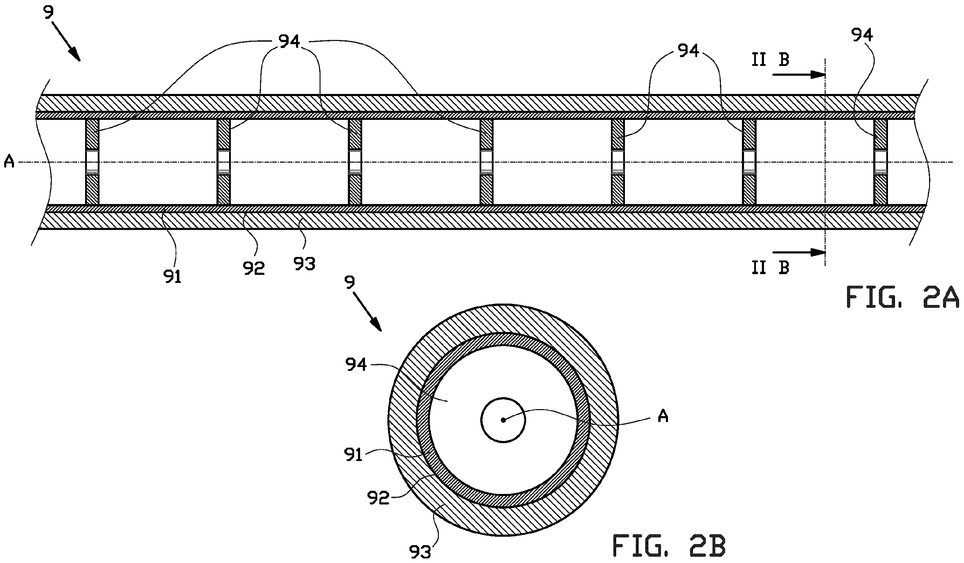

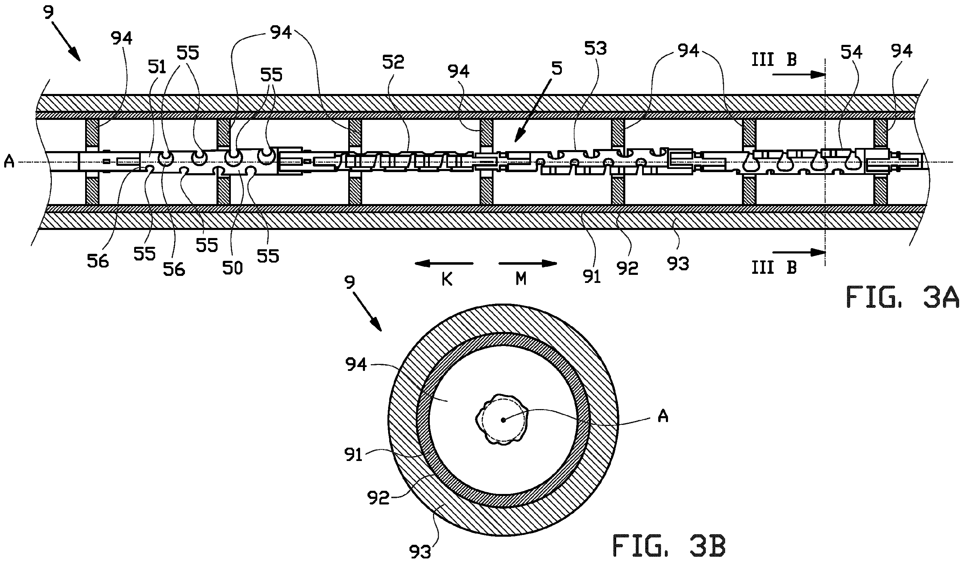

As shown in figure 3A, the optional planing tool 5 is configured or arranged for widening a cavity vacated by the core in figures 2A and 2B to a diameter in which the cutting tool 1 can be inserted more easily. The planing tool 5 comprises one or more planing members, in this example four planing members 51-54. The planing members 51-54 are coupled in a way that allows for articulation of the planing members 51-54 relative to each other. Moreover, the planing members 51-54 are angularly offset relative to each other about the center axis A.

Each planing member 51-54 comprises a planing body 50 with at least one planing edge 55 for slicing of shavings of the internals. In this example, the planing body 50 widens along the longitudinal direction L of the cable 9 and has a plurality of planing edges 55 arranged at an increasingly wider diameter for progressively slicing of shavings of the internals. For each planing edge 55, the planing body 50 is provided with a channel or mouth 56 to discharge the shavings. In particular, each mouth 56 is conical to promote discharge of the shavings towards the wider part of the mouth 56. Note that, in this exemplary embodiment, the mouths 56 may be conical in alternating directions to discharge the shavings more evenly across the cable 9.

The method for ejecting the internals from the cable 9 with the use of the aforementioned tools 1, 1', 2, 3, 5 will now be briefly elucidated with reference to figures 1A-7B.

Figures 1A and 1B show the situation at the start of the method, prior to removing the internals.

Figures 2A and 2B show the situation in which the core has been ejected from the cable 9 with any core ejection method known per se. In particular, the core is heated to facilitate its removal. Although some placeholders 94 may be dislodged or deformed, most of the placeholders 94 remain in place.

Figures 3A and 3B shows the situation in which the cavity vacated by the core is optionally widened by moving the aforementioned planing tool 5 through the cable 9 in the cutting direction K or a direction opposite to said cutting direction K. In this manner, the cavity may be widened to approximately five to seven millimeters.

Figures 4A and 4B show the situation in which the placeholders 94 are cut by moving the cutting tool 1 through the cable 9 in the cutting direction K. To pull the cutting tool 1 through the cable 9, the first pull wire 41 is connected to the cutting tool 1. The cutting tool 1 is pulled through the cavity vacated by the core 90 in figures 3A and 3B. The cut placeholder 94' is shown in figure 4B. The cutting tool 1 is configured for cutting into the placeholders 94 radially. Hence, the cut placeholder 94' has been partitioned or cut into distinct sections that can be scraped off and/or removed more easily in the subsequent steps of the method. The cut placeholder 94' remains at least partially connected to the dielectric 91 in the radial direction R and therefore remain more or less in place or in position after the cutting. In other words, the cut placeholders 94' are still more or less uniform after cutting. The scraping can thus be performed more steadily.

The placeholders 94 are cut steadily, in one continuous motion and/or in one-way only along the longitudinal direction L. In this manner, it can be prevented that the placeholders 94' that have already been cut are deformed and clog the cable 9.

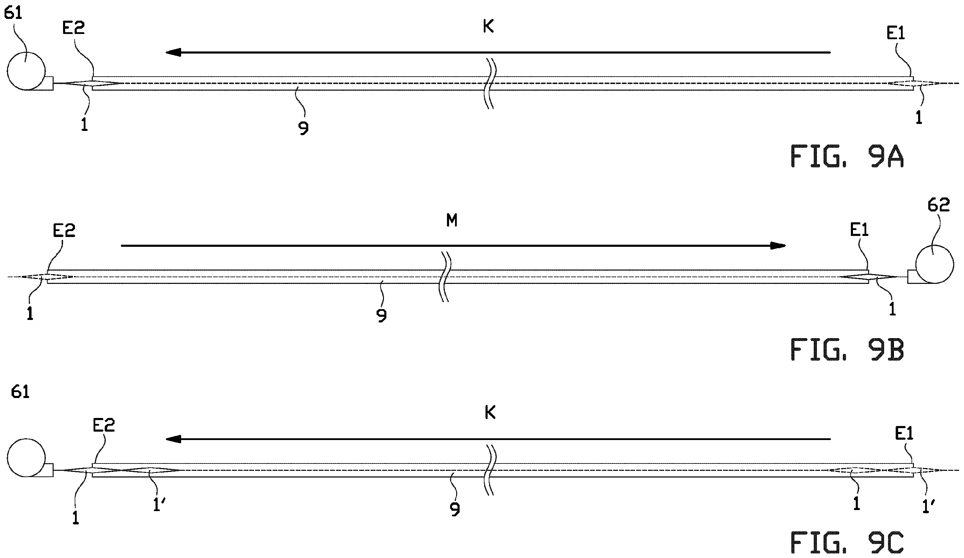

In other words, as shown in figure 9A, the cutting tool 1 is inserted into the cable 9 at and/or from a first end E1 and then pulled, for example by a first winch 61, in a continuous motion and/or in one-way only in the cutting direction K through the entire length of the cable 9, up to and/or out of the second end E2 of the cable 9, opposite to the first end E1. Hence, the cutting is performed continuously or substantially continuously from the first end E1 of the cable 9 up to the second end E2. Alternatively formulated, the cutting tool 1 is first moved from the first end all the way up to the second end prior to scraping off and/or removing the cut internals. In particular, no internals are scraped off and/or removed prior to the cutting tool 1 reaching the second end E2 and/or prior to leaving the cable 9 at the second end E2.

In the context of the present invention, the term 'up to' is to be interpreted as a position in close proximity to or at the specified end. In this example, the cutting tool 1 is moved from the first end E1 towards the second end E2 of the cable 9 over at least ninety-five percent of the length of the cable 9, and preferably over at least ninety-eight percent of the length of the cable 9, to be considered to have moved 'up to' the second end E2.

Optionally, the cutting tool 1 may be pulled through the cable 9 for a second run, which allows for cutting into the previously cut placeholders 94' slightly deeper. In particular, the cutting blades 11, 12, 13 follow to path of least resistance and therefore tend to follow or stay within the cuts made during the initial cutting. Consequently, the force required to pull the cutting tool 1 through the cable 9 on the second run is considerably smaller.

The cutting direction of the cutting tool 1 during the second run may be the same as the cutting direction K during the initial cutting, or opposite to said cutting direction K during the initial cutting. If the cutting direction K remains the same, the cutting tool 1 may be returned from the second end E2 to the first end E1 of the cable 9 through the cable 9 in the retraction direction M, as shown in figure 9B. This may require a second winch 62, as shown in figure 9B on the right hand side. Alternatively, the cutting tool 1 may be returned to the first end E1 of the cable 9 outside of the cable 9. It has been found that, when the cutting tool 1 is retracted through the cable 9, the cutting blades 11, 12, 13 tend to stay within or follow the initial cuts of the respective cutting blades 11, 12, 13, thus preventing deformation or entanglement of the cut placeholders 94' as a result of said retraction.

Figures 5A and 5B shows the situation in which the further cutting tool 1' is optionally pulled through the cable 9 in the cutting direction K in the same way as the aforementioned cutting tool 1, in particular together with said aforementioned cutting tool 1, for example as shown in figure 9C. The further cutting tool 1' may be coupled to the aforementioned cutting tool 1 during a single run through the cable 9, or as part of the second run mentioned above. The second run has the advantage that the force required to pull the cutting tools 1, 1' through the cable 9 has already been reduced significantly by the initial cutting. As shown in figure 5B, the angle offset between the cutting tools 1, 1' generates additional cuts in the placeholders 94' that divide said cut placeholder 94' into even more distinct sections compared to the cutting result of the single cutting tool 1 in figure 4B.

Figures 6A and 6B show the situation in which the cut placeholders 94' are scraped off by moving the scraping tool 2 in the scraping direction S. The cut placeholders 94' are scraped off circumferentially, with at least a vector component in the circumferential direction and/or helically. In particular, the cut placeholders 94' are scraped off by the relatively movement between the flutes 22 of the drill 20 and the cable 9 in the scraping direction S. Preferably, the scraping tool 2 is undriven in the circumferential direction C about the center axis A. In other words, the scraping tool 2 is not actively driven to rotate about the center axis A and can be considered static in terms of its rotation. Instead, it sways or rotates only slightly as a result of the scraping action, i.e. only a few degrees.

Because of the scraping, any remaining connections between the cut placeholders 94' and the surrounding layers of the cable 9, in particular the dielectric 91 can be terminated, thereby effectively converting the internals into the loose, separate or distinct particles P as shown in figures 6A and 6B.

Figures 7A and 7B show the situation in which the removal tool 3 has been moved in the removal direction T opposite to the scraping direction S to remove and/or discharge the particles P. In said removal direction T, the particles P can be removed through a part of the cable 9 in which the cut placeholders 94' are already scraped off and do not hinder the removal step. Moreover, the removal step can be performed directly after completing the scraping step, merely by reversing the direction of the interconnected scraping tool 2 and removal tool 3.

The steps of scraping and removing are alternated repeatedly. In particular, the scraping tool 2 is alternately pulled in the scraping direction S and the removal direction T by the second pull wire 42 and the third pull wire 43, respectively. By alternating the steps, the particles P do not have to be removed all at once. Instead, the method can be performed initially over a relatively small length of the cable. The length is incrementally increased after at least one sequence of scraping and removing. Preferably, the length is incrementally increased with less than two meters, preferably with less than one meter and most preferably approximately fifty centimeters. In other words, the cut placeholders 94' can be scraped off and removed in increasingly longer stages, thereby preventing accumulation of large amounts of particles P and potential clogging of the cable 9.

As shown in figure 7A, the brushes 31-33 are used to mechanically force the scraped off particles P out of the cable 9 when the removal tool 3 is moved in the removal direction T.

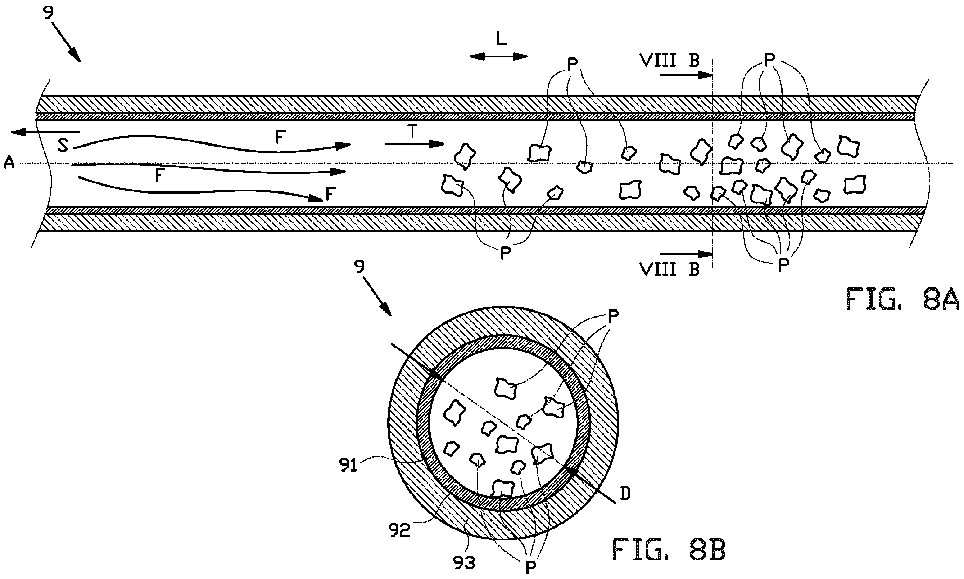

Alternatively, as shown in figures 8A and 8B, the particles P are removed in with the use of fluid, preferably compressed air. The flow of the fluid is shown schematically in figure 8A with arrows F. When using compressed air or another fluid, no further tools need to be inserted into the cable 9 to remove the particles P.

In the examples as shown, only the core 90 and the placeholders 94 are removed. This generates an empty cable 9 with a cavity that has an internal diameter D equal to the inner diameter of the dielectric 91. In this example, said internal diameter D is at least five millimeters, preferably at least seven millimeters and more preferably at least eight millimeters. This provides sufficient room for reinsertion of a modern telecommunications core, in particular a core consisting of a large number of optical fibers and one or more electrical conductors, preferably at least ninety-six optical fibers and at least two copper conductors.

Optionally, the previously described tools 1, 1', 2, 3 may be dimensioned to at least partially cut into, scrape off and remove the dielectric 91 as well.

It is to be understood that the above description is included to illustrate the operation of the preferred embodiments and is not meant to limit the scope of the invention. From the above discussion, many variations will be apparent to one skilled in the art that would yet be encompassed by the scope of the present invention.

### LIST OF REFERENCE NUMERALS

- 1: cutting tool
- 1': further cutting tool
- 10: cutter holder
- 11: first cutting blade
- 11': further first cutting blade
- 12: second cutting blade
- 12': further second cutting blade
- 13: third cutting blade
- 13': further third cutting blade
- 14: first pulling eye
- 15: second pulling eye
- 2: scraping tool
- 20: drill
- 21: head
- 22: flute
- 23: tail
- 24: first pulley eye
- 25: second pulling eye
- 3: removal tool
- 31: first brush
- 32: second brush
- 33: third brush
- 41: first pull wire
- 42: second pull wire
- 43: third pull wire
- 44: first pull wire section
- 45: second pull wire section
- 46: third pull wire section
- 47: first wire connector
- 48: second wire connector
- 49: third wire connector
- 5: planing tool
- 50: planing body
- 51: first planing member
- 52: second planing member
- 53: third planing member
- 54: fourth planing member
- 55: planing edge
- 56: mouth
- 61: first winch
- 62: second winch
- 9: cable
- 90: core
- 91: dielectric
- 92: conducting shield
- 93: outer sheath
- 94: placeholder
- 94': cut placeholder

- A: center axis
- C: circumferential direction
- D: internal diameter
- E1: first end
- E2: second end
- F: fluid
- G: cutting planes
- G': further cutting planes
- K: cutting direction
- L: longitudinal direction
- M: retraction direction
- P: particles
- R: radial direction
- S: scraping direction
- T: removal direction
- Z: mid-plane

## Claims

1. Method for ejecting internals from a cable, in particular a coaxial cable, wherein the method comprises the steps of:
a) cutting into the internals along a longitudinal direction of the cable by moving a cutting tool in the longitudinal direction through the cable;
b) scraping off the internals cut in step a) by moving a scraping tool, different from the cutting tool, in the longitudinal direction through the cable; and
c) removing the internals scraped off in step b) in the longitudinal direction from the cable;
wherein the cutting in step a) is continuous or substantially continuous from a first end of the cable up to a second end of the cable, opposite to the first end.

2. Method according to claim 1, wherein the internals are cut in step a) by moving the cutting tool in one-way only in a cutting direction along the longitudinal direction of the cable prior to step b).

3. Method according to claim 1 or 2, wherein the method comprises the step of returning the cutting tool to the first end after the cutting in step a) for another run of continuous or substantially continuous cutting from the first end up to the second end, prior to step b).

4. Method according to any one of the preceding claims, wherein the cable has a center axis extending in the longitudinal direction, wherein the cutting tool has a cutter holder for holding one or more cutting blades, wherein the cutter holder is symmetrical or substantially symmetrical in a mid-plane perpendicular to the center axis.

5. Method according to any one of the preceding claims, wherein the internals are cut radially in step a).

6. Method according to any one of the preceding claims, wherein the cable has a center axis extending in the longitudinal direction, wherein the internals are cut in a plurality of cutting planes extending radially to said center axis in step a),
preferably wherein the plurality of cutting planes are evenly distributed in a circumferential direction about the center axis,
more preferably wherein the method further comprises the step of cutting into the internals along the longitudinal direction of the cable in a plurality of further cutting planes by moving a further cutting tool in the longitudinal direction through the cable, wherein the further cutting planes are angularly offset about the center axis with respect to the cutting planes.

7. Method according to any one of the preceding claims, wherein the internals are scraped off circumferentially and/or helically in step b).

8. Method according to any one of the preceding claims, wherein the scraping tool is a drill.

9. Method according to claim 8, wherein the drill has a head, a tail and flutes extending helically between the head and the tail, wherein the flutes define helical scraping edges.

10. Method according to claim 9, wherein the helical scraping edges are flattened.

11. Method according to any one of the preceding claims, wherein the cable has a center axis extending in the longitudinal direction, wherein the scraping tool is undriven in a circumferential direction about said center axis.

12. Method according to any one of the preceding claims, wherein steps b) and c) are alternated repeatedly,
preferably wherein steps b) and c) are performed along a length of the cable that is incrementally increased after at least one sequence of steps b) and c),
more preferably wherein the length is incrementally increased with less than two meters, and preferably with less than one meter.

13. Method according to any one of the preceding claims, wherein the internals are scraped off in step b) in a scraping direction parallel to the longitudinal direction of the cable, wherein the internals are removed in step c) in a removal direction opposite to the scraping direction,
preferably wherein the internals are scraped off in step b) by moving a scraping tool in the scraping direction through the cable, wherein the internals are removed in step c) by moving a removal tool in the removal direction, wherein the scraping tool and the removal tool are connected to be moved in unison in the scraping direction and the removal direction.

14. Method according to any one of the preceding claims, wherein the cable comprises a dielectric and placeholders concentrically arranged within said dielectric, wherein the internals that are cut, scraped-off and removed in steps a), b) and c) are the placeholders,
preferably wherein the dielectric remains in the cable after step c).

15. Method according to any one of the preceding claims, wherein the method comprises the step of removing the core from the cable prior to step a),
preferably wherein the method further comprises the step of widening a cavity vacated by the cable prior to step a).
